# EUROPEAN PATENT SPECIFICATION

(11) **EP 1 572 522 B1**
(45) Date of publication and mention of the grant of the patent: **22.12.2010**
(21) Application number: 02769491.8
(22) Date of filing: 10.05.2002
(51) Int. Cl.: B62D 21/02, E04C 3/07

(54) **VEHICLE FRAME**
FAHRZEUGRAHMEN
CHASSIS DE VEHICULE

(30) Priority: 11.05.2001 FI 20010988
(43) Date of publication of application: 14.09.2005
(73) Proprietor: Sainio, Simo-Pekka, 90240 Oulu (FI)
(72) Inventor: Sainio, Simo-Pekka, 90240 Oulu (FI)
(74) Representative: Määttä, Jukka Tapani
(86) International application number: PCT/FI2002/000401
(87) International publication number: WO 2002/092414

(56) References cited:
- EP-A1- 0 649 949
- WO-A1-00/17463
- WO-A1-97/29255
- FR-A- 754 102
- FR-A1- 2 289 694
- US-A- 5 507 522

## Description

The invention relates to a vehicle chassis frame comprising at least two main rails running longitudinally the length of the vehicle and a plurality of cross members connecting the same, whereby both of the main rails are basically constructed as an I-beam comprising an upper and a lower flange portion with a web portion connecting the same. Later in the text, the invention is elucidated using a trailer chassis as an exemplary implementation of the structure.

Modern truck trailers conventionally use a so-called ladder chassis frame. This kind of chassis frame has two longitudinal main rails connected to each other by means of a plurality of cross members. To the chassis frame thus assembled, after a possible auxiliary chassis is mounted thereon, are mounted the axles and a desired upper assembly of the vehicle. Conventionally, the main rail is made from sheet metal by welding.

In its simplest form, the rail is made by welding a vertical web plate between two superposed horizontal flange plates, whereby an I-beam is formed. The height of the beam is generally larger than its width. Typically, the plates are made from a standard grade of structural steel. In conventional constructions, the cross members are fabricated as C-beams that are attached to the main rails by their specifically designed end flanges.

In conventional constructions, the welded seams connecting the plates are located in a close vicinity of each other thus affecting the entire structure and rigidity of the vertical web. Hence, the welded seams are the key factors defining the strength of the vehicle chassis. However, the welding of a vertical web over the whole length of the main rail to the horizontal flange plates is a complicated operation. For a sufficiently high strength, it is also necessary to make the main rail substantially high, whereby the net weight of the frame becomes large.

In such a design, the relatively thin, yet high vertical web plate may undergo deformation under varying loads. During its fabrication, the main rail must also be provided with plural crosswise welded seams that substantially deteriorate the strength of the finished structure. Furthermore, standard-grade structural steel corrodes rapidly whatever postprocessing is used for protecting the vehicle frame.

Still further, the fabrication and mounting of the cross members is a complex task requiring multiple worksteps. Firstly, the end flanges must be welded to the cross members, whereupon welding thereof to the main rails can take place. Additionally, openings for wiring and piping must be machined on cross member end plates. Finally, the attachment of the end flanges must be made using vertically welded seams that are unfavorably subjected to stresses.

Alternatives for conventional I-beam construction are known. For example US 5507522 discloses a vehicle chassis frame that is an I-beam construction. The I-beam is made from two plate structures both comprising a first continuous U-section and a second continuous U-section. When the two plate structures are placed abutting each other, the U-sections form two box sections. The box sections are connected to each other by two metal flanges that trap the two metal plate structures. On the above US document is based the preamble of independent claim 1.

From WO 97/29255 are known cross members of a chassis frame that are fabricated from a single metal sheet. The cross member edges include bendable flap portions. These flap portions are utilized when the cross member is connected between the upper and lower flanges of an I-beam that belongs to the chassis frame.

FR 754102 also discloses cross members where foldable flanges are utilized.

It is an object of the invention to provide a novel type of vehicle chassis frame of a higher stiffness and strength than prior constructions, yet having smaller member dimensions and lower net weight. The characterizing features of the present invention are disclosed in the appended claims. The main rail of a chassis frame according to the invention is made from a plurality of simple parts connected to each other by large-area attachments. This approach provides a lightweight yet stiff and strong main rail. Also the cross member is simpler than in prior constructions and can be attached more advantageously as to its load-bearing capability. Moreover, the material of the chassis frame is selected such that its corrosion rate is minimal. In addition to proper choice of the frame material, a significant increase in the structural strength is attained, whereby both the main rails and the cross members can be made smaller and hence having a lower weight than those of prior-art constructions. Uncompromised by these features, a trailer having a chassis frame according to the invention meets specifications regulated by statute.

Next, the invention will be examined in greater detail by making reference to the appended drawings illustrating certain applications of the invention, wherein
FIG. 1 is a side elevation view of an exemplary embodiment of a trailer having a chassis frame according to the invention;
FIG. 2a is a top plan view of the basic construction of a trailer chassis frame;
FIG. 2b is a side elevation view of an embodiment of a trailer chassis frame;
FIG. 2c is an enlarged partial view of a portion of the trailer chassis frame of FIG. 2a during its fabrication;
FIG. 3a is a rear view of an embodiment of the chassis main rail according to the invention;
FIG. 3b is a cross-sectional view of the parts of the chassis main rail of FIG. 3a taken apart from each other;
FIG. 4a is a rear view of an alternative embodiment of the chassis main rail according to the invention;
FIG. 4b is a cross-sectional view of the parts of the chassis main rail of FIG. 4a taken apart from each other;
FIG. 4c is a rear view of a still another alternative embodiment of the chassis main rail according to the invention;
FIG. 4d is a cross-sectional view of the parts of the chassis main rail of FIG. 4c taken apart from each other;
FIG. 5a is a developed plan view of the web part of rail in the trailer chassis frame of FIG. 2b during its fabrication;
FIG. 5b is a side elevation view of an embodiment of a cross member according to the invention during its fabrication;
FIG. 6 is an axonometric view of the attachment step of a main rail and a cross member according to the invention to each other;
FIG. 7 is a top plan view of the basic construction of an another embodiment of a trailer chassis frame according to the invention;
FIG. 8 is a side elevation view of the chassis frame of FIG. 7;
FIG. 9 is a cross-sectional view taken along plane B-B of the main rail of the chassis frame of FIG. 7;
FIG. 10 is a cross-sectional view taken along plane A-A of the main rail of the chassis frame of FIG. 7;
FIG. 11 is a view of the attachment step of the main rail and the cross member to each other taken along plane B-B of the chassis frame embodiment of FIG. 7;
FIG. 12 is a sectional view taken along plane D-D of FIG. 11; and
FIG. 13 is a view of the attachment step of the main rail and the cross member to each other taken along plane A-A of the chassis frame embodiment of FIG. 7.

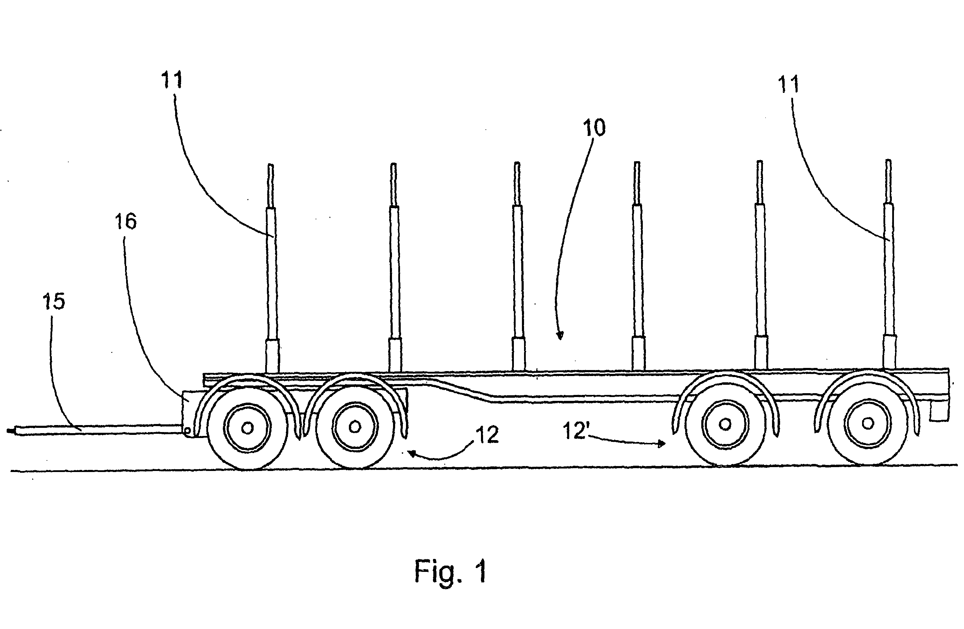

Referring to FIG. 1, therein is illustrated a trailer implemented using a chassis frame 10 according to the invention. Herein, the trailer is intended for transportation of logs, whereby bunk stakes 11 are mounted on the chassis 10.

To the chassis frame 10 are also mounted axles 12 and 12' with wheels and suspension components. Not being limited by the teaching of this exemplary embodiment, the chassis frame according to the invention can also be used as the chassis frame of other types of vehicles and in the manufacture of trailers having different overhead structures and adapted for different purposes. The chassis frame according to the invention is also suited for use in the manufacture of semitrailers.

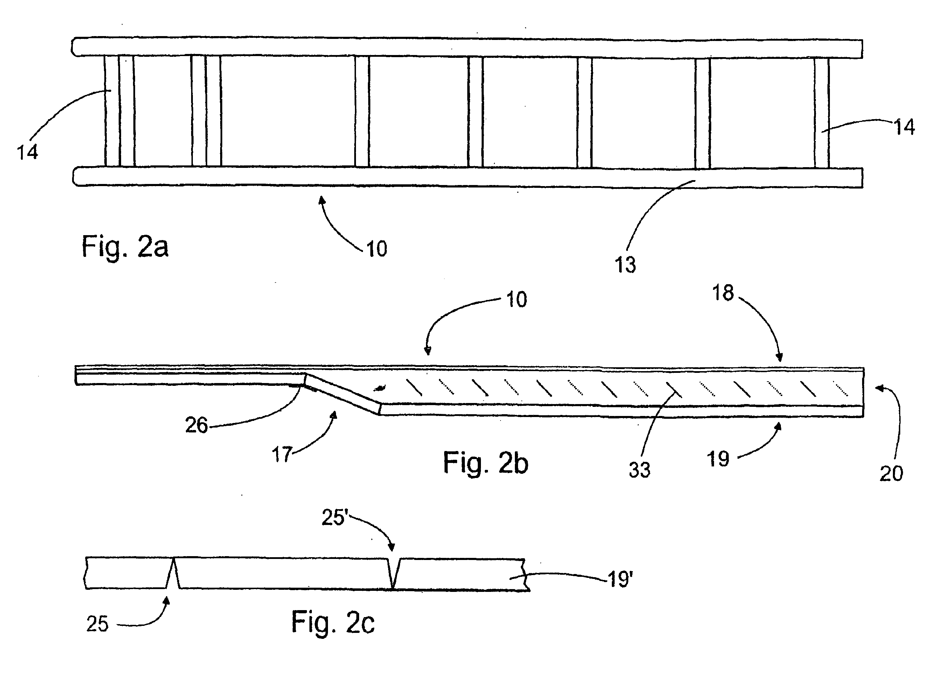

FIGS. 2a and 2b show a complete embodiment of a chassis frame 10. Conventionally, chassis frame 10 comprises two main rails 13 with cross members 14 attached therebetween. Thus a ladder construction of the kind shown in FIG. 2a results. As shown in FIG. 2b, the height of chassis frame 10 is made smaller at its front portion to permit free rotation thereunder of a bogey assembly 16 comprising front axles 12 and having a hitch beam 15 connected thereto. While in the present embodiment the tapering portion 17 of the chassis frame 10 is a critical point in regard to the loading of the main rail 13, the construction according to the invention to be described later in the text in greater detail is capable of providing good strength.

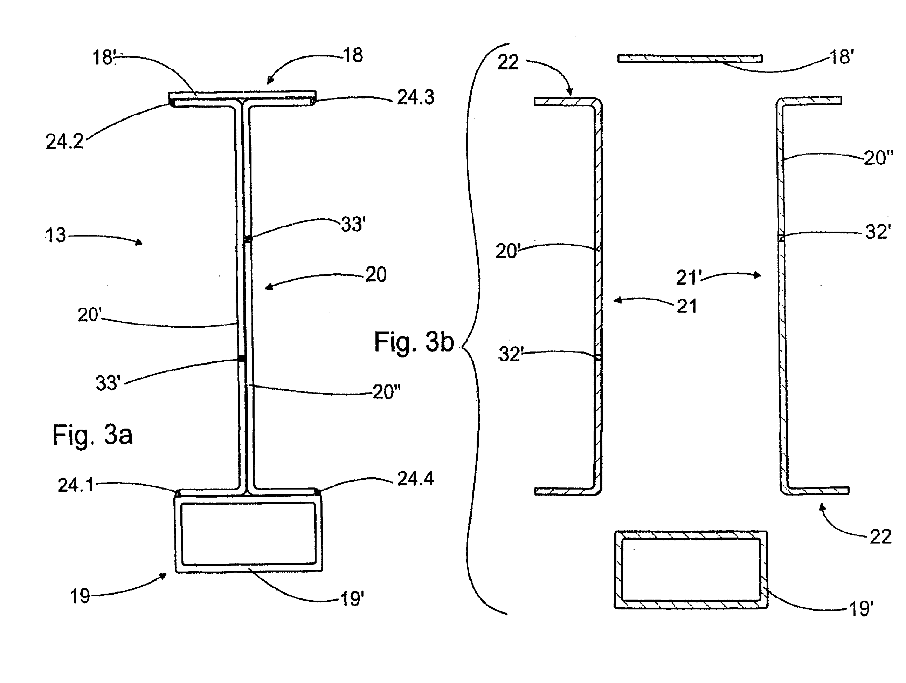

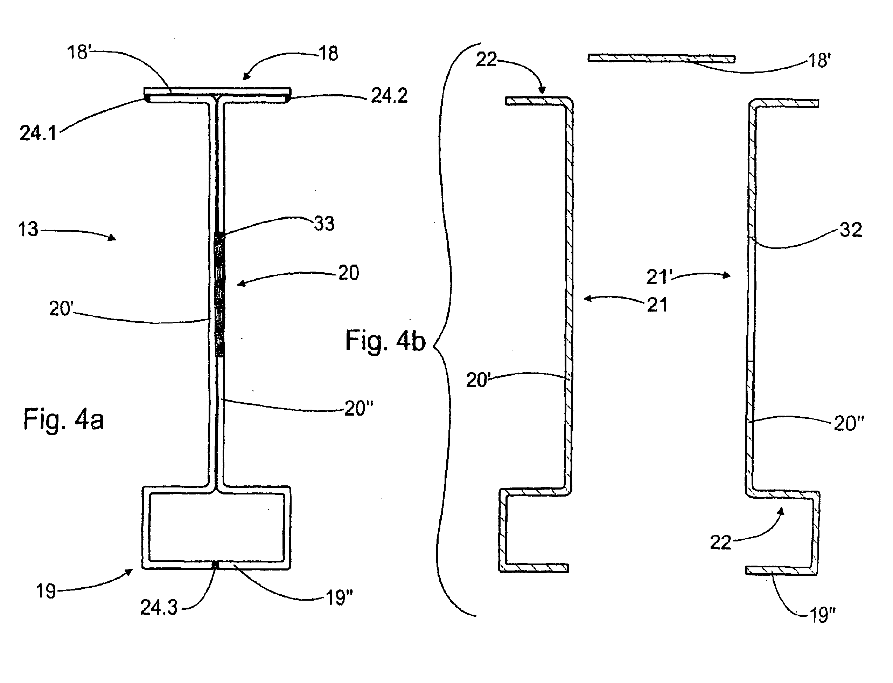

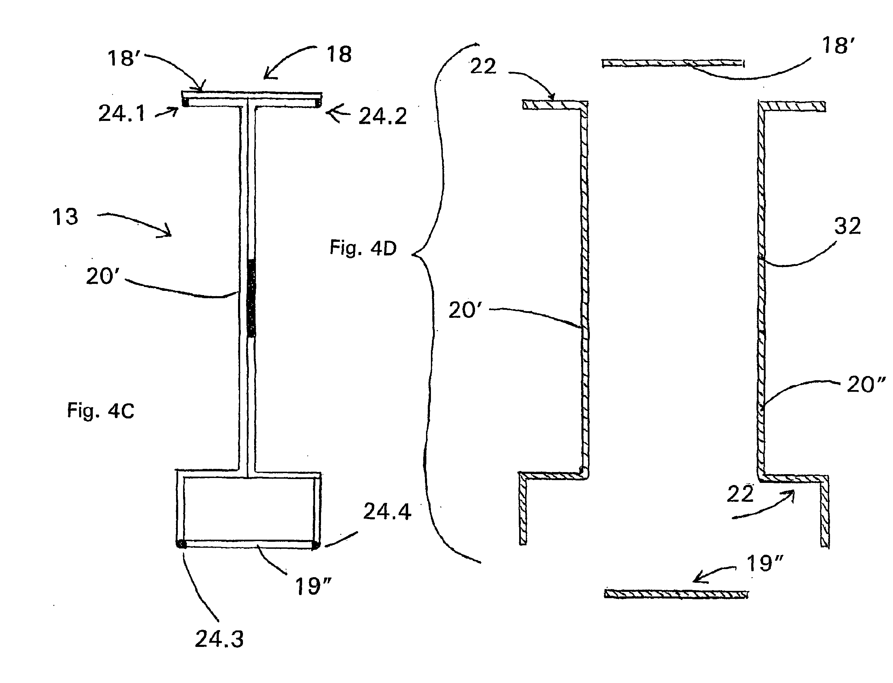

In a prior-art fashion, main rail 13 is comprised of an upper flange 18 and a lower flange 19 with a web 20 connecting the same (FIG. 3a). Differently from the prior art, the web 20 according to the invention is formed from two plate structures 20' and 20" that include at least one continuous U-shaped section. Furthermore, the web portions 21, 21' of the plate structures 20' and 20" are adapted in a back-to-back fashion, whereby the upper flange portions 22 of the plate structures form a part of the upper flange 18 of the beam section (FIGS. 3a and 4a). Still further, the lower flange 19 of the beam section has connected thereto a box section defining a continuous longitudinal space (FIG. 3a), or, alternatively, the lower flange is adapted to form a box section defining a continuous longitudinal space (FIG. 4a). Yet further, the box section may be accomplished by connecting a cover plate to the lower flange portions of the web plates after they are suitably formed (FIG. 4c). A box section thus formed in the main rail 13, together with the plate sections 20' and 20", give a substantial improvement in the rigidity of the final structure. With the help of flange portions 22 and 22', it is also easier to attach the vertical web 20 to other parts of main rail 13.

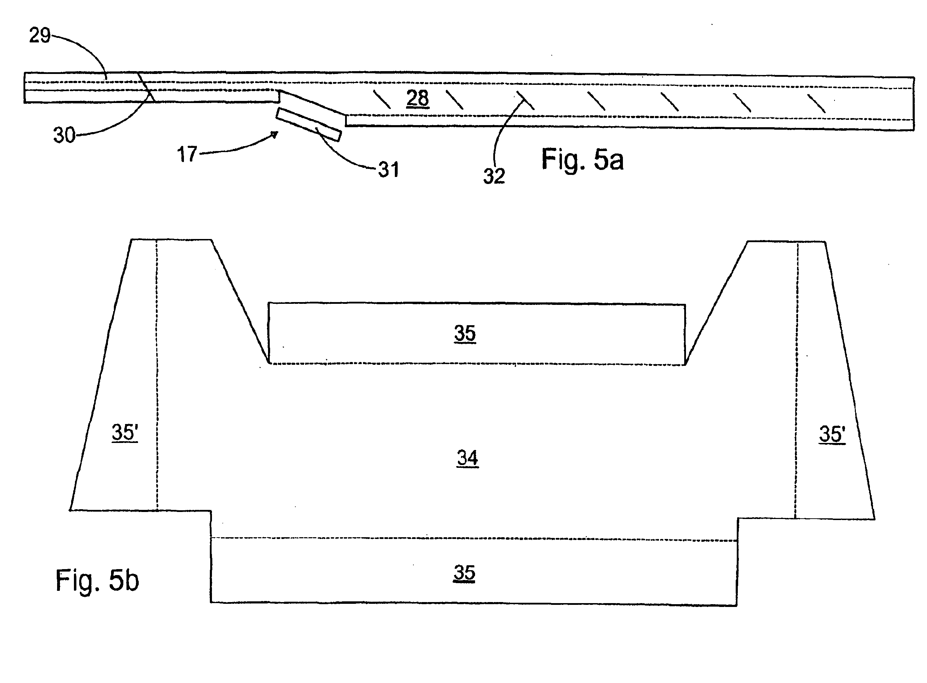

It is a general concept of the invention to produce all the parts of the main rail in maximally long continuous lengths, whereby the main rail can be fabricated with a minimal number of welded seams running across the rail. FIG. 5a shows a developed plan view of a plate blank 28 suitable for the fabrication of a main rail structure according to the invention.

Advantageously, the plate blank 28 has a length substantially equal to the entire length of the chassis frame, whereby the number of crossing welds is minimized. Due to reasons dictated by practical manufacturing constraints, the front end of the plate blank 28 is made from a short extension plate 29. The oblique welded seam 30 thus required at the joint, however, does not compromise the strength of the structure inasmuch a suspension assembly 16 with wheels 16 will be mounted at this welded seam 30. In fact, this point has a greater number of braces than other parts of the construction attached thereto. The plate blank 28 is bent along the dashed lines, whereby the upper and lower flange portions 22 and 22' are respectively formed thereto. Additionally, at the tapering area 17 is attached a narrow supplementary plate 31 that forms the lower flange of the rail at this area. The plate blank 28 is further provided at a given spacing from each other with oblique cuts 32 whereon at a later stage of the rail fabrication are made strengthening welds 33. The opposed plate blanks have these cuts made at unsymmetrical places, whereby the strengthening welds will be located at alternate points on either side of the main rail along the length thereof as is drawn in FIG. 2b. The practical function of the strengthening welds is to prevent bulging of the sides of the plate structure. The strengthening welds may also be implemented as spot welds 33', in which case the plate structures 20' and 20" may be provided with drilled holes 32'. As can be seen from FIG. 3b, the drilled holes 32' are located alternately at different heights in the web portions of the rail.

As shown in FIGS. 3a, 4a and 4c, the edges of each one of the U-shape bent plates have welds 24.1 - 24.4 running longitudinally along the main rail. In addition to the welds 24.1 - 24.4, a glued joint is provided between the upper flange portion 18, the U-shaped plate structures 20' and 20", and the lower flange portion 19. In addition to rendering substantially more strength to the structure, the glued joint makes welding of the edges easier inasmuch the glue is advantageously allowed to set before the welding of the edges is started. While the heat of welding may disintegrate a certain area of the glued joint, no major loss of strength is caused.

The construction according to the invention offers a higher strength than prior structures, thus allowing the main rail to be made shallower than conventional. Prior main rails have been 400 mm high and 150 mm wide. Now, a main rail according to the invention can be made 350 mm high and 120 mm wide for equal strength and load-bearing capability. In addition to its glued joints, the strength of the present structure is improved by selecting extra-high-strength structural stainless steel as the material of the upper and lower flange portions as well as for the web. This kind of structural steel has a yield strength not lower than 600 N/mm², advantageously 750 to 850 N/mm². As a result, the structure may be made more lightweight than in prior-art embodiments. When subjected to bending, the strength of the plate blanks made from an extra-high-strength steel grade is further improved. After bending, the plates may exhibit a yield strength as high as 1000 N/mm². Also the use of conventional postprocessing may be omitted when stainless steel is used as the structural material. Further protection is rendered by the glued joint that prevents ingress of moisture into the gaps between the connected plate structures.

FIG. 3b shows the parts of a main rail apart from each other. The parts may be standard components or tailor-made in an uncomplicated fashion. The upper and lower flanges are obtainable as ready-made parts with dimensions extending over the entire length of the main rail. The plate parts 20' and 20" forming the U-shaped web portion 20 are relatively easy to fabricate by bending. In conjunction with the extra-high-strength steel grade used herein, bending gives a substantial increase in the material yield strength that further improves the strength of the finished main rail. Owing to the continuous sections of the structure, the number of cross-welded seams on the main rail are minimized.

FIGS. 4a and 4b; 4c, 4d show alternative embodiments of the parts of a chassis frame according to the invention. Parts serving equal functions are denoted in the diagrams with the same numerals. In this case, the fabrication of the lower portion of the main rail does not need any separate continuous section, but instead, the shapes bent on the plate parts 20' and 20" form the box-section part mentioned earlier in the text. While the bends required herein are slightly more difficult to make, the construction can be implemented without using a continuous box-section tubing. Also the number of welds is smaller than in the embodiment described earlier. Furthermore, the web joins smoothly to the lower flange portion without welds.

At the main rail tapering point 17 of the chassis frame, the lower flange section requires certain working operations. In FIG. 2c is shown a portion of this section 19' during its fabrication. To bend the section 19', two notches 25 and 25' are made there such that one side of the section 19' remains intact. In the finished structure, the area about the notch 25 closer to the trailer hitch beam is strengthened by an external patch plate 26 attached by welding to the underside of the section 19'. In spite of the notches and bends thus made, the lower flange section however is continuous over the entire length of the trailer chassis. Moreover, the lower flange section maintains an essentially rectangular box-shaped cross section that provides a continuous installation duct, e.g., for the trailer tailgate wiring and piping.

Depending on the application, the dimensions of the parts in the main rails may be varied. Generally, at the point of the largest height of the main rail, the lower flange section height is 10 to 25 %, advantageously 15 to 20 % of the overall height of the main rail. In the exemplary embodiment discussed above, the external dimensions of the main rail are 120 mm wide by 150 mm high. Respectively, the dimensions of the rectangular box section are 60 mm high by 120 mm wide and, further respectively, the steel plate strip 18 forming the upper flange 18 is 5.5 mm thick by 120 mm wide. The plate structure 20' is bent from a 4 mm thick plate. When necessary, the plate structure 20' at the tapering area 17 of the chassis frame 10 can be made from a plurality of different blanks, yet keeping the basis construction of the chassis frame unchanged.

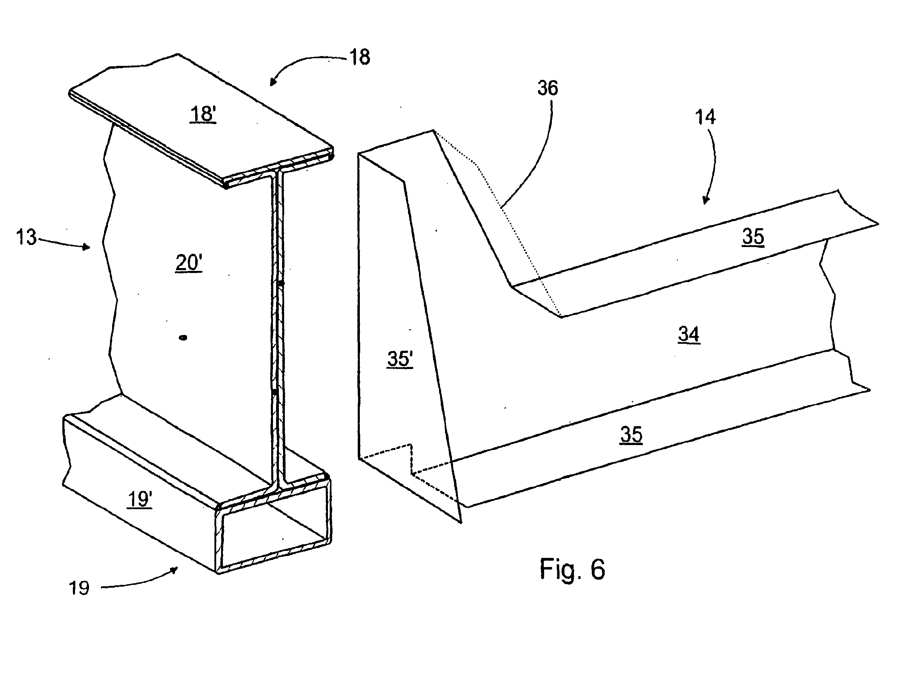

Also the cross members of the chassis frame according to the invention feature a novel construction. In FIG. 5b is shown a plate blank 34 wherefrom the entire cross member 14 can be made. To the upper and lower edges of the plate blank 34 is arranged a first pair of bendable flap portions 35 such that can serve as stiffening flanges. In this embodiment, the finished cross member has a C-shaped cross section. Additionally, to the ends of the plate blank 34 is arranged a second pair of bendable flap portions 35' that are used for attaching the cross member 14 to the vertical web of main rail 13. By virtue of this arrangement, the separate flange plates generally used in prior art can be omitted entirely. Furthermore, the plate blank is dimensioned so that it fits precisely into the gap between the upper flange 18 and the lower flange 19. Still further, the other ones 35' of the second pair of bendable flaps are provided with an oblique side, whereby also the seam to be welded during assembly also is oriented obliquely. As known, an oblique welded seam is advantageous under stress. The joint between the cross member and the main rail can be finished by welding thereon a steel strip 36 denoted in FIG. 6 by a narrow dashed line. The strip is of the same material as that used in the other parts of the chassis frame according to the invention.

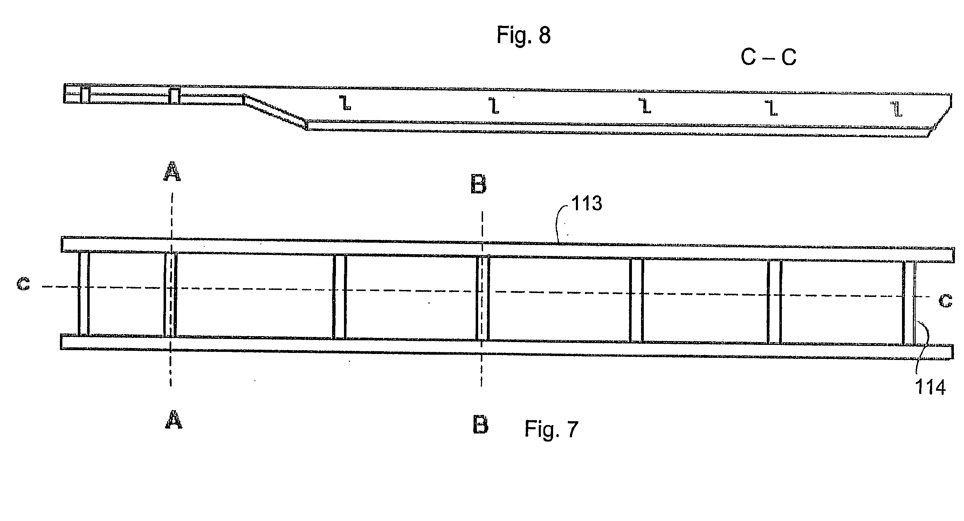

In the chassis frame embodiment of FIG. 7, the basic construction of the chassis frame is similar to the ladder structure used in the embodiment of FIG. 2a discussed above. The chassis frame of this embodiment comprises two main rails 113 running parallel at a distance from each other and connected to each other by cross members 114 spaced at a distance from each other.

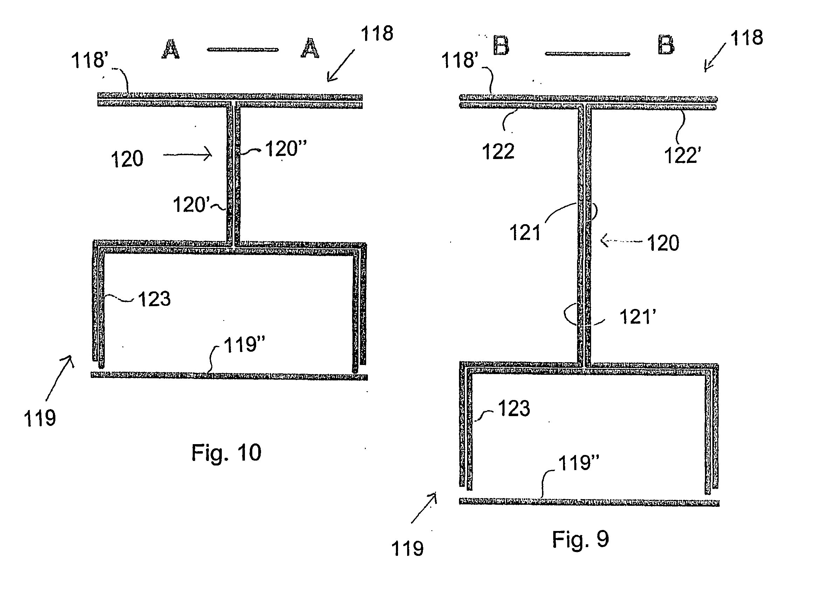

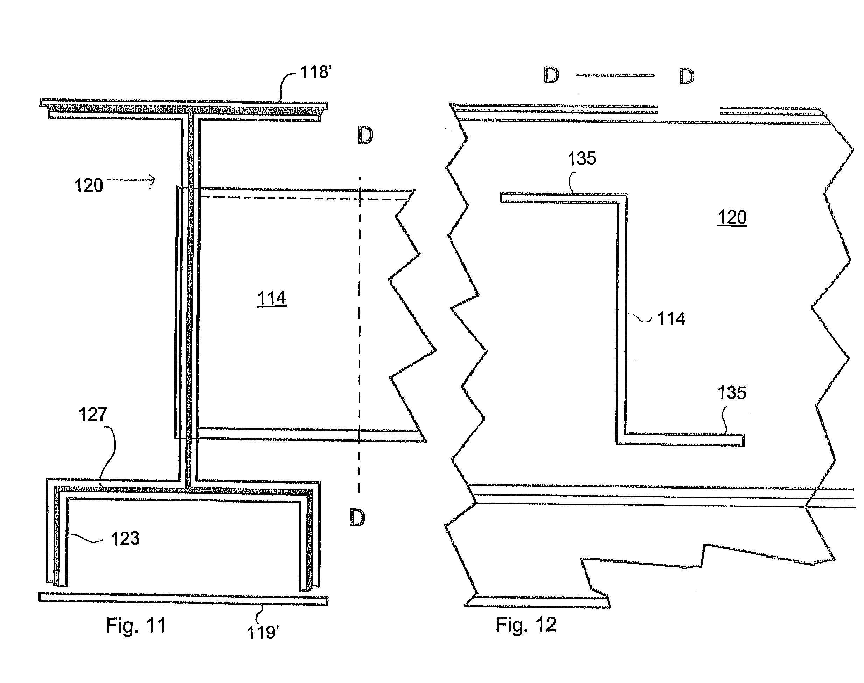

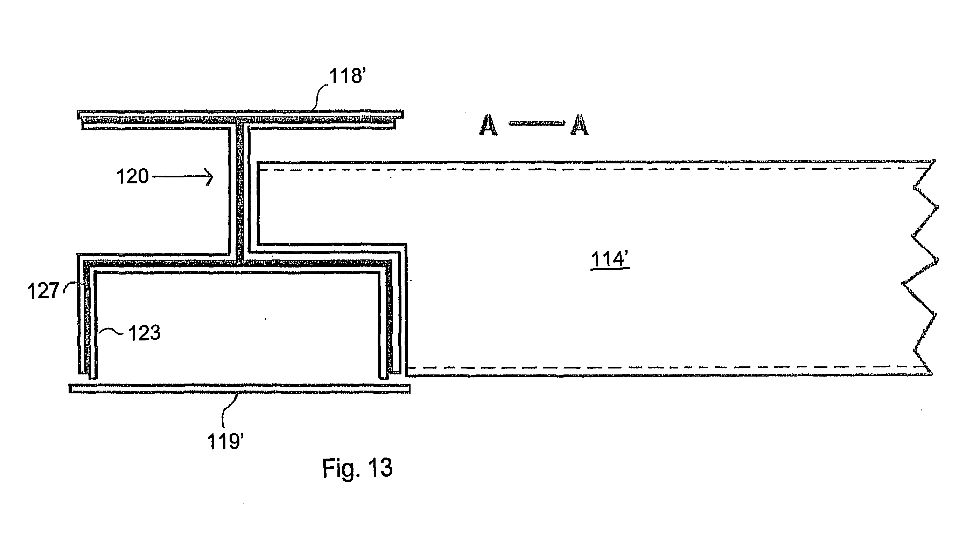

As can be seen from FIGS. 9 and 10, the cross section of main rail 113 is basically similar to that of FIGS. 3a, 4a and 4c discussed above. In this embodiment, the box section formed to the lower part of the rail is strengthened by a U-shaped section 123 adapted to the interior of the box-section structure. The box section is closed in a similar fashion as the structure of FIG. 4c by welding a plate 119" over the flanges of the U-section formed by the lower flange portions of the bent web plates. The main rail structure is made stronger by a glued joint 127 between the opposed plates as is explicitly shown in FIGS. 11 and 13.

In this alternative construction, also the structure of the cross members 114 is implemented in a fashion different from that of FIGS. 5 and 6. In the illustrated embodiment at the full-height areas of the chassis frame, the cross members have a Z-shaped cross section as shown in FIG. 12. With a shape equal to the cross section of the cross member, to the web 120 of main rail 113 is made a cut through which the end of the cross member is inserted and then attached to the main rail by welding (FIG. 11).

In the semitrailer construction described as an exemplary embodiment, the main rail is made shallower at the front part of the chassis frame, whereby the cross member within this area is advantageously conventional C-section, U-section or box-section structure supported to the lower flange structure of the main rail in the fashion shown in FIG. 13.

A chassis frame made in accordance with the invention is shallow, yet stiff. It is not subject to corrosion even if protective postprocessing is omitted. Furthermore, the chassis frame is easier to manufacture than those of prior art, and its welded seams in particular can be made with high precision inasmuch the glued joints bond the parts to be welded to each other. Notwithstanding its more expensive structural material, the overall manufacturing cost of the present chassis frame remains smaller than those of prior-art constructions.

## Claims

1. A vehicle chassis frame comprising at least two main rails (13; 113) running in the longitudinal direction of the vehicle and a plurality of cross members (14; 114) connecting the main rails, either one of the main rails (13; 113) basically comprising an I-beam formed by an upper and a lower flange (18, 19; 118, 119) with a web (20; 120) connecting the same, the web (20; 120) being made from two plate structures (20', 20"; 120', 120") comprising at least a first continuous U-section shaped portion, wherein the web portions (21,21'; 121, 121') of said plate structures are placed abutting on each other and the upper flange portions (22; 122, 122') thereof form a part of the upper flange (18; 118), and the lower flange portion (19; 119) is adapted to form a box section defining a continuous space in the longitudinal direction of the main rail, **characterized in that** the box section (119) is strengthened by a U-shaped section (123) adapted to the interior of the box-section structure.

2. The chassis frame of claim 1, **characterized in that** along the full-height length of the main rail (113) the height of the lower flange section (119) is 10 to 25 %, advantageously 15 to 20 % of the overall height of the main rail (113).

3. The chassis frame of any one of claim 1 or 2, **characterized in that** the opposed surfaces of the chassis frame plate parts are bonded to each other by a glue joint.

4. The chassis frame of any one of claims 1 - 3, **characterized in that** the edges of each one of said plate structures have welded joints made thereto such that the welds run longitudinally along the main rail.

5. The chassis frame of any one of claims 1 - 4, **characterized in that** the upper flange portion (118), the web (120) and the lower flange portion (119), as well as the cross members (114) are made from extra-high-strength structural stainless steel having a yield strength not lower than 600 N/mm².

6. The chassis frame of any one of claims 1 - 5, **characterized in that** the cross member (114) is fabricated from a single sheet piece having its upper and lower edges arranged to include a first pair of bendable flap portions (135) such that serve for making stiffening flanges, that the cross member (114) has a Z-shaped cross section and that to the web of main rail (113) is made a cut having a shape compatible with the external cross-sectional dimensions of the cross member.

## Patentansprüche

1. Fahrzeugfahrgestellrahmen, umfassend: Zumindest zwei, in der Längsrichtung des Fahrzeugs verlaufende Hauptschienen (13, 113) und eine Vielzahl von die Hauptschienen verbindende Querbauteile (14, 114), wobei eine der Hauptschienen (13, 113) im Wesentlichen einen I-Balken umfasst, der durch einen oberen und einen unteren Flansch (18, 19, 118, 119) mit einem dieselben verbindenden Steg (20, 120) ausgebildet ist, wobei der Steg (20, 120) aus zwei zumindest einen ersten kontinuierlichen U-sektionsförmigen Abschnitt umfassenden Plattenstrukturen (20', 20"; 120', 120") hergestellt ist, wobei die Stegabschnitte (21, 21'; 121, 121') der Plattenstrukturen anliegend aneinander platziert sind, und die oberen Flanschabschnitte (22; 122, 122') hiervon einen Teil des oberen Flansches (18; 118) ausbilden, und der untere Flanschabschnitt (19, 119) eingerichtet ist, dass er eine Box-Sektion ausbildet, die einen kontinuierlichen Raum in der Längsrichtung der Hauptschiene definiert, **dadurch gekennzeichnet, dass** die Box-Sektion (119) durch eine U-förmige Sektion (123) verstärkt wird, die an das Innere der Box-Sektionstruktur angepasst ist.

2. Fahrgestellrahmen gemäß Anspruch 1, **dadurch gekennzeichnet, dass** entlang der Vollhöhenlänge der Hauptschiene (113) die Höhe der unteren Flanschsektion (119) 10 bis 25%, vorteilhafterweise 15 bis 20%, der Gesamthöhe der Hauptschiene beträgt.

3. Fahrgestellrahmen gemäß einem von Anspruch 1 oder 2, **dadurch gekennzeichnet, dass** die gegenüberliegenden Flächen der Fahrgestellrahmen-Plattenteile durch eine Klebeverbindung aneinander befestigt sind.

4. Fahrgestellrahmen gemäß einem der Ansprüche 1-3, **dadurch gekennzeichnet, dass** die Kanten von jeder der Plattenstrukturen geschweißte Verbindungen aufweisen, die derart hieran hergestellt sind, dass die Schweißnähte längs entlang der Hauptschiene verlaufen.

5. Fahrgestellrahmen gemäß einem der Ansprüche 1-4, **dadurch gekennzeichnet, dass** der obere Flanschabschnitt (118), der Steg (120) und der untere Flanschabschnitt (119) ebenso wie die Querbauteile (114) aus einem eine Fließgrenze von nicht weniger als 600 N/mm2 aufweisenden Profiledelstahl mit einer extra hohen Festigkeit hergestellt sind.

6. Fahrgestellrahmen gemäß einem der Ansprüche 1-5, **dadurch gekennzeichnet, dass** das Querbauteil (114) aus einem einzelnen Blechstück gefertigt ist, das seine oberen und unteren Kanten so angeordnet hat, dass sie ein erstes Paar biegsamer Umschlagabschnitte (135) derart aufweisen, dass diese zum Herstellen von versteifenden Flanschen dienen, dass das Querbauteil (114) einen Z-förmigen Querschnitt aufweist, und dass der Steg der Hauptschiene (113) einen Ausschnitt herstellt, der eine mit den externen Querschnittsdimensionen des Querbauteils kompatible Gestalt aufweist.

## Revendications

1. Cadre de châssis de véhicule comprenant au moins deux rails principaux (13; 113) allant dans la direction longitudinale du véhicule et une pluralité d'éléments latéraux (14; 114) reliant les rails principaux, l'un quelconque des rails principaux (13; 113) comprenant à la base un profilé en I formé par un rebord supérieur et un rebord inférieur (18, 19; 118, 119) avec une âme (20; 120) reliant ceux-ci, l'âme (20; 120) étant faite de deux structures de plaque (20', 20"; 120', 120") comprenant au moins une première partie en forme de section en U continue, dans lequel les parties d'âme (21, 21'; 121, 121') desdites structures de plaque sont placées en butée l'une sur l'autre et les parties de rebord supérieur (22; 122, 122') de celles-ci forment une partie du rebord supérieur (18; 118), et la partie de rebord inférieur (19; 119) et adaptée pour former une section formant boîtier définissant un espace continu dans la direction longitudinale du rail principal, **caractérisé en ce que** la section formant boîtier (119) est renforcée par une section en forme de U (123) adaptée à l'intérieur de la structure de section formant boîtier.

2. Cadre de châssis selon la revendication 1, **caractérisé en ce que** le long de la longueur totale du rail principal (113) la hauteur de la section de rebord inférieur (119) est de 10 à 25%, avantageusement de 15 à 20% de la hauteur totale du rail principal (113).

3. Cadre de châssis selon la revendication 1 ou 2, **caractérisé en ce que** les surfaces opposées des parties de plaque de cadre de châssis sont collées l'une sur l'autre par un joint de colle.

4. Cadre de châssis selon l'une quelconque des revendications 1-3, **caractérisé en ce que** les bords de chacune desdites structures de plaque ont des joints soudés faits dessus de telle manière que les joints suivent longitudinalement le rail principal.

5. Cadre de châssis selon l'une quelconque des revendications 1-4, **caractérisé en ce que** la partie de rebord supérieur (118), l'âme (120) et la partie de rebord inférieur (119), ainsi que les éléments latéraux (114) sont faits d'acier inoxydable structurel à extra-haute résistance ayant une résistance qui n'est pas inférieure à 600 N/mm².

6. Cadre de châssis selon l'une quelconque des revendications 1-5, **caractérisé en ce que** l'élément latéral (114) est fabriqué à partir d'une seul pièce de tôle ayant ses bords supérieur et inférieur agencés pour inclure une première paire de parties d'ailes pliables (135) de telle manière qu'elles servent à faire des rebords de renforcement, **en ce que** l'élément latéral (114) a une section transversale en forme de Z et **en ce que** l'âme du rail principal (113) est faite d'une coupe ayant une forme compatible avec les dimensions en section transversale extérieure de l'élément latéral.
